# EUROPÄISCHE PATENTANMELDUNG

(11) **EP 0 990 680 A1**
(43) Veröffentlichungstag der Anmeldung: **05.04.2000**
(21) Anmeldenummer: 98118443.5
(22) Anmeldetag: 29.09.1998
(51) Int. Cl.: C08L 97/02, C08G 18/70

(54) **Verfahren zur Herstellung einer Bindemitteldispersion**

(71) Anmelder: Haltermann AG, 20095 Hamburg (DE)
(72) Erfinder: Mustroph, Gert, Dr., 06886 Lutherstadt Wittenberg (DE); Höltmann, Wilhelm, Dr., 21220 Seevetal (DE)
(74) Vertreter: Glawe, Delfs, Moll & Partner

(57) **Zusammenfassung**

Gegenstand der Erfindung ist ein Verfahren zum Herstellen wäßriger Bindemitteldispersionen, bei dem wenigstens ein Pflanzenöl- oder -fettharz mit wenigstens einem Di- oder Polyisocyanat und wenigstens einem Paraffin dispergiert wird. Es ist dadurch gekennzeichnet, daß Harnstoff als Dispersionsstabilisator zugesetzt wird. Die Erfindung betrifft ferner ein nach diesem Verfahren hergestellte Bindemitteldispersion sowie deren Verwendung bei der Herstellung von Formkörpern.

## Beschreibung

Die Erfindung betrifft ein Verfahren zum Herstellen wäßriger Bindemitteldispersionen, bei dem wenigstens ein Pflanzenöl- oder -fettharz mit wenigstens einem Di- oder Polyisocyanat und wenigstens einem Paraffin dispergiert wird.

Preßwerkstoffe wie z. B. Spanplatten, Verbundplatten oder andere Formkörper werden üblicherweise hergestellt, indem man das Rohmaterial (z. B. Holzspäne, Holzfasern oder dergleichen) mit Bindemitteln heiß verpreßt. Als Bindemittel werden im Stand der Technik Harnstoff/Formaldehyd-, Phenol/Formaldehydharze sowie Isocyanate verwendet.

Bei der Herstellung von Spanplatten werden die Holzpartikel üblicherweise vor der verpressung mit Paraffin behandelt, um ausreichende Feuchtebeständigkeit zu erzielen. Das Paraffin wird in flüssiger Form auf die Holzteilchen aufgesprüht. Dies erfordert einen separaten Verfahrensschritt und damit hohen Aufwand.

DE-A 196 19 396 offenbart ein Verfahren zur Herstellung wäßriger Bindemittelemulsionen auf der Basis von Pflanzenölharzen und Polyisocyanat. Bei der Herstellung des Bindemittels wird eine wäßrige Paraffinemulsion mit eingemischt.

Der vorliegenden Erfindung liegt die Aufgabe zugrunde, ein Verfahren der eingangs genannten Art zu schaffen, daß die Herstellung einer Bindemitteldispersion mit verbesserter Haltbarkeit ermöglicht. Die erfindungsgemäß hergestellte Dispersion soll vor der Verwendung (d. h. vor dem Beleimen der Späne) länger lagerbar sein.

Die Erfindung löst diese Aufgabe dadurch, daß Harnstoff als Dispersionsstabilisator zugesetzt wird.

Zunächst seien einige im Rahmen der Erfindung verwendete Begriffe erläutert.

Bei einem Pflanzenöl- oder -fettharz handelt es sich um ein Harz auf der Basis pflanzlicher Öle oder Fette. Verschiedene Öle und Fette werden detailliert beschrieben in Ullman's Enzyklopedia of Industrial Chemistry, 5. Auflage, Band A10, S. 173-243. Der Begriff "Harz" ist definiert in DIN55958 (Ausgabe 12/1988). Er bezeichnet flüssige bis feste organische Produkte mit in der Regel amorpher Struktur.

Als Di- oder Polyisocyanate kommen aliphatische, cycloaliphatische, araliphatische, aromatische und heterocyclische Di- oder Polyisocyanate in Betracht. Eine beispielhafte Aufzählung findet sich in Justus Liebigs Analen der Chemie, 572, Seiten 45 bis 136. Weitere geeignete Di- oder Polyisocyanate sind in EP-B-0 084 313 offenbart. Bevorzugt werden erfindungsgemäß 4,4'-, 2,4'-, und/oder 2,2'-Diphenylmethanisocyanate sowie daraus abgeleitete Polyisocyanate verwendet.

Der Begriff "Paraffin" bezeichnet jedes feste oder flüssige Gemisch, das zu wesentlichen Teilen aus gesättigten aliphatischen Kohlenwasserstoffen besteht.

Der Begriff "Dispersion" umfaßt sowohl Emulsionen auch als Suspensionen.

Erfindungsgemäß wird der Bindemitteldispersion Harnstoff als Dispersionsstabilisator zugesetzt. Überraschenderweise können so Dispersionen (Emulsionen) hergestellt werden, die über mehrere Monate bei wechselnden Lagerbedingungen lagerfähig sind, ohne daß eine Phasentrennung und damit ein Zusammenbruch in nennenswertem Umfang eintritt. Die erfindungsgemäß erhöhte Stabilität der Dispersion erlaubt die Verwendung preiswerter Fest- oder Flüssigparaffine als Einsatzstoff bei der Herstellung. Es ist, anders als im Stand der Technik gemäß DE-A 196 19 396, nicht erforderlich, von vornherein wäßrige Paraffinemulsionen als Einsatzstoff zu verwenden. Erfindungsgemäß kann daher auf preiswerte Industrieparaffine zurückgegriffen werden.

Für den Erfolg der Erfindung ist es nicht von Bedeutung, ob die Einmischung des Harnstoffs während des Dispergierens der übrigen Bestandteile erfolgt oder ob Harnstoff erst nachträglich der fertigen Dispersion zugesetzt und mit dieser vermischt wird. In der Regel wird man den Harnstoff während der Herstellung der Dispersion zusetzen. Die nachträgliche Stabilisierung bereits fertiger Dispersionen ist jedoch ebenfalls Teil der Erfindung.

Die Herstellung der Dispersion erfolgt technisch in geeigneten Mischaggregaten, beispielsweise in Statikmischern, Rührwerksmischköpfen, Inline-Ultra-Turrax-Aggregaten, Hochdruckmischköpfen oder dergleichen.

Eine erfindungsgemäß hergestellte Bindemitteldispersion weist in der Regel eine Lagerstabilität von wenigstens vier Monaten auf. Im Stand der Technik gemäß DE-A 196 19 396 wird demgegenüber trotz Verwendung teurer Paraffinemulsionen bei der Herstellung lediglich eine Lagerstabilität von allenfalls vier bis sechs Wochen erzielt.

Als Pflanzenölharz wird bevorzugt ein Additionsprodukt eines ungesättigten Pflanzenöls mit α,β-ungesättigten Carbonsäuren oder Carbonsäurederivaten verwendet. Besonders bevorzugt werden Pflanzenöle eingesetzt, deren Gesamtlinol- und/oder Linolensäuregehalt im Fettsäuremuster 50 % übersteigt. Geeignete Pflanzenöle können beispielsweise aus Pflanzenspezies des Ölleins, Türkischen Drachenkopfs, Perilla, Bohnenkrauts, Ölziests, Catnips, Saflors, Leindotters, der Sonnenblumen, des Mohns, der Nachtkerze, des Hanfes usw. gewonnen werden. Der Gesamtdoppelbindungsgehalt in den Fettsäuren der eingesetzten Pflanzenöle sollte bevorzugt wenigstens 0,7 mol/100g erreichen.

Die ungesättigten Pflanzenöle können mit α,β-ungesättigten Carbonsäuren oder Carbonsäurederivaten (besonders bevorzugt Maleinsäureanhydrid) zu Pflanzenölharzen umgesetzt werden. Die Reaktion erfolgt bevorzugt durch Vermischung der Komponenten und Erwärmen unter Rühren auf eine Temperatur von 180-240°C (bevorzugt unter Rückfluß). Nach Abschluß des Aufheizens ist die Addition der Carbonsäure bzw. des Carbonsäurederivats an die Doppelbindungen des Pflanzenöls innerhalb von 20-30 min weitgehend abgeschlossen. Die Umsetzung kann durch weiteres Rühren bevorzugt bei Temperaturen oberhalb von 200°C für eine Zeitdauer von 1-2 h vervollständigt werden. Nach Abschluß der Reaktion können zu dem noch heißen Harz Colsolventien (bevorzugt C₁ bis C₄-Carbonsäuren) zur Einstellung der gewünschten Harzviskosität gegeben werden.

Der Anteil des Pflanzenöl- oder -fettharzes in der Bindemitteldispersion beträgt vorzugsweise 10-42 Gew.-%. Im Rahmen der vorliegenden Anmeldung beziehen sich Prozent- oder Teilangaben immer auf Gewichtsprozente bzw. Gewichtsteile, soweit nicht anders angegeben.

Der Anteil des Di- oder Polyisocyanats in der Bindemitteldispersion beträgt vorzugsweise 0,1-12 Gew.-%, weiter vorzugsweise 0,4-4 Gew.-%.

Der Paraffinanteil in der Bindemitteldispersion bevorzugt zwischen 10 und 30 Gew.-%. Das Paraffin kann in fester und/oder verflüssigter Form zugesetzt werden. Alternativ kann das Paraffin auch in Form einer bevorzugt 40-65%igen wäßrigen Paraffinemulsion zugesetzt werden. In diesem Fall wird bei der Berechnung des Paraffinanteils in der Dispersion nicht die Gesamtmenge der wäßrigen Paraffinemulsion zugrunde gelegt, sondern nur deren Paraffinanteil.

Der erfindungsgemäß als Dispersionsstabilisator verwendete Harnstoff wird bevorzugt in einem Anteil von 0,1-10 Gew.%, weiter vorzugsweise 2-5 Gew.-% zugesetzt. Bevorzugt erfolgt das Zumischen während der Herstellung der Dispersion, jedoch kann der Harnstoff alternativ auch in die fertige Dispersion eingemischt werden.

Die Herstellung der Dispersion aus dem Pflanzenölharz und den übrigen Bestandteilen erfolgt bevorzugt bei einer Temperatur von 20-90°C, weiter vorzugsweise 40-75°C. Die Temperatur sollte ausreichend hoch sein, um ein Emulgieren des Pflanzenölharzes und Paraffins zu ermöglichen.

Bevorzugt wird bei der Herstellung der Dispersion zusätzlich ein Emulgator eingesetzt, besonders bevorzugt handelt es sich dabei um ein Cellulosederivat, insbesondere um einen Celluloseether. Einer weiteren bevorzugten Ausführungsform zufolge wird der Celluloseether ausgewählt aus der Gruppe bestehend aus Hydroxyethylcellulose, Methylhydroxyethylcellulose, Methylhydroxypropylcellulose und Mischungen der vorgenannten Stoffe.

Die erfindungsgemäße Herstellung kann chargenweise erfolgen, bevorzugt ist jedoch eine kontinuierliche Herstellung der Bindemitteldispersion.

Gegenstand der Erfindung ist ferner ein Verfahren zum Stabilisieren einer wäßrigen Bindemitteldispersion, die wenigstens ein Pflanzenöl- oder -fettharz, wenigstens ein Di- oder Polyisocyanat und wenigstens ein Paraffin enthält. Das Verfahren ist dadurch gekennzeichnet, daß Harnstoff als Dispersionsstabilisator zugefügt wird.

Dieser Aspekt der Erfindung trägt der Tatsache Rechnung, daß erfindungsgemäß auch bereits fertiggestellte Bindemitteldispersionen nachträglich mit Harnstoff stabilisiert werden können, um deren Lagerfähigkeit zu erhöhen.

Ein weiterer Aspekt der Erfindung betrifft wäßrige Bindemitteldispersionen, die nach dem vorstehend beschriebenen Verfahren erhältlich sind und die demnach wenigstens ein Pflanzenöl- oder -fettharz, wenigstens ein Di- oder Polyisocyanat und wenigstens ein Paraffin enthalten. Erfindungsgemäß sind sie mittels Harnstoff stabilisiert.

Die Bindemitteldispersionen können erfindungsgemäß verwendet werden bei der Herstellung geformter Preßkörper aus Spänen, Fasern, Granulaten und/oder Mehlen. Besonders bevorzugt werden sie eingesetzt bei der Herstellung von Formkörpern aus Holzwerkstoffen, insbesondere bei der Herstellung von Spanplatten, Faserplatten, OSB-Platten oder dergleichen. Die Verwendung bei der Herstellung von Formkörpern aus anderen organischen Rohstoffen (beispielsweise Kunststoffabfällen) oder anorganischen Rohstoffen (beispielsweise Blähglimmer oder Silicatkugeln) ist ebenfalls denkbar. Die Herstellung der Formkörper erfolgt in dem Fachmann geläufiger Weise unter Anwendung von Druck und Hitze und bedarf hier keiner näheren Erläuterung.

Wie oben dargelegt, erfolgt die Herstellung erfindungsgemäßer Bindemitteldispersionen bevorzugt kontinuierlich. Vorzugsweise wird dabei wie folgt vorgegangen:

In einem Vorratsbehälter wird Celluloseether (bevorzugt Hydroxyethylcellulose) in einer Konzentration von 0,1-3 Gew.-% in kaltem Wasser vorgequollen. Die wäßrige Phase wird in einen mit einem Rührwerk ausgerüsteten Emulsionsbehälter mit einem Durchsatz von 20-70 Tln./h, bevorzugt 35-60 Tln./h überführt. Unter Rühren wird mit einem Durchsatz von 0,1-12 Tln./h, bevorzugt 0,4-4 Tln./h ein Polyisocyanat (z. B. Desmodur®1520 A20 der Bayer AG) zugeführt.

Gleichzeitig wird Paraffin zugegeben. Sofern eine wäßrige Paraffinemulsion mit einem Paraffingehalt von 50 % verwendet wird, werden 20-60 Tle./h Paraffinemulsion eingebracht. Sofern jedoch preisgünstiges Festparaffin verwendet wird, wird dieses in einer Menge von 10-30 Tln./h zugegeben. In diesem Fall ist es vorteilhaft, den Inhalt der Vorlage auf wenigstens etwa 40°C zu erwärmen, um ein Emulgieren des Paraffins zu erleichtern. Es können kostengünstige Rohparaffine (z. B. Waxrex79® der Mobil Oil AG) oder raffinierte Paraffine (z. B. Mobilwachsl45® der Mobil Oil AG) verwendet werden.

Im nächsten Schritt wird unter Rühren ein auf 100-300°C, bevorzugt 140-240°C erwärmtes Pflanzenölharz eingebracht und emulgiert. Es stellt sich eine Mischtemperatur von bevorzugt etwa 50-80°C ein, die ggf. auch ohne externe Zusatzheizung oder Kühlung gehalten werden kann. Das Pflanzenölharz wird bevorzugt in einer Menge von 10-42 Tln./h zugeführt.

Die Erfindung wird nachfolgend anhand von Beispielen erläutert. Die Beispiele 1 und 2 betreffen die Herstellung eines Pflanzenölharzes aus Pflanzenöl und α,β-ungesättigter Carbonsäure, die in den nachfolgenden Beispielen 3 bis 6 als Ausgangsstoffe bei der Herstellung erfindungsgemäßer Bindemitteldispersionen verwendet werden.

### Beispiel 1

100 Tle. Drachenkopföl mit einem Doppelbindungsgehalt von 0,8239 mol/100g Fettstoff und einem Linolensäuregehalt von 65,6 % der Gesamtfettsäuren werden mit 79,1 Tln. Maleinsäureanhydrid (MSA) und 4,0 Tln. Borsäure unter Rühren erhitzt. Bei Temperaturen von ca. 190°C ist deutlicher Rückfluß des MSA erkennbar. Nach ca. 20 min ist der Rückfluß des MSA wesentlich reduziert und die Temperatur wird auf 215°C erhöht. Nach weiteren 2 h Reaktionszeit wird die Umsetzung abgebrochen, der Ansatz durch Zugabe von 9,2 Tln. Essigsäure zu einer ca. 95%igen Harzlösung abgekühlt.

### Beispiel 2

100 Tle. Leinöl mit einem Doppelbindungsgehalt von 0,7768 mol/100g Fettstoff und einem Linolensäuregehalt von 59,9% der Gesamtfettsäuren werden mit 73,8 Tln. Maleinsäureanhydrid und 4,5 Tln. p-Toluolsulfonsäure unter Rühren erhitzt. Bei Temperaturen von ca. 190°C ist deutlicher Rückfluß des MSA erkennbar. Nach ca. 20 min ist der Rückfluß von MSA wesentlich reduziert und die Temperatur wird auf 230°C erhöht. Nach weiteren 2 h Reaktionszeit wird die Umsetzung abgebrochen und der Ansatz durch Zugabe von 3,4 Tln. Essigsäure zu einer hochviskosen, rotbraunen Harzlösung abgekühlt.

### Beispiel 3

100 Tle. Leinöl mit einem Doppelbindungsgehalt von 0,7768 mol/100g Fettstoff und einem Linolensäuregehalt von 59,9 % der Gesamtfettsäuren werden mit 73,8 Tln. Maleinsäureanhydrid (MSA) und 4,5 Tin. p-Toluolsulfonsäure unter Rühren erhitzt. Bei Temperaturen von ca. 190°C ist deutlicher Rückfluß des MSA erkennbar. Nachdem der Rückfluß des MSA wesentlich reduziert ist, wird die Temperatur auf 230°C erhöht und nach weiteren 2 h Reaktionszeit die Umsetzung abgebrochen.

### Beispiel 4

50 Tle. Hydroxyethylcellulose werden in 2500 Tln. kaltem Wasser vorgequollen. Die etwa 2%ige Lösung wird mit einem Durchsatz von 350 Tln./h in ein Emulsionsgefäß überführt und dabei gleichzeitig auf etwa 50°C erwärmt. In diese Lösung wird ein verflüssigtes Paraffin (Waxrex79® der Mobil Oil AG) mit einem Durchsatz von 100 Tln./h sowie polymeres Diphenylmethan-4,4'-Diisocyanat (PMDI) mit einem Durchsatz von 3 Tln./h eindosiert und unter Rühren emulgiert. Nach Erreichen einer ausreichenden Vorlagemenge werden 300 Tle./h eines gemäß Beispiel 1 hergestellten Pflanzenölharzes (eingestellt auf eine Temperatur von etwa 180°C) in der warmen Vorlage emulgiert. Es stellt sich in der Vorlage eine Temperatur von etwa 70-80°C ein. Gleichzeitig mit dem Pflanzenölharz werden etwa 30 Tle./h Harnstoff und 180 Tle./h Wasser zugesetzt, so daß die Emulsion auf einen Endgehalt von etwa 30 % Harz verdünnt wird.

Die so hergestellte Emulsion ist nach einer über fünfmonatigen Lagerung unter wechselnden Lagerbedingungen stabil und ohne Einschränkungen anwendbar.

### Beispiel 5

In einem Vorratsbehälter werden 50 Tle. Hydroxyethylcellulose in 2500 Tin. kaltem Wasser vorgequollen. Die etwa 2%ige Lösung wird mit einem Durchsatz von 350 Tln./h in ein Emulsionsgefäß als Vorlage überführt und gleichzeitig auf etwa 55°C erwärmt. In diese Lösung wird verflüssigtes Paraffin (Mobilwachs145® der Mobil Oil AG) mit einem Durchsatz von 100 Tln./h sowie PMDI mit einem Durchsatz von 3 Tln./h eindosiert und unter Rühren emulgiert. Nach Erreichen einer ausreichenden Vorlagemenge werden 300 Tle./h eines auf 170°C temperierten Pflanzenölharzes (hergestellt gemäß Beispiel 2) in der warmen Vorlage emulgiert. Zur Stabilisierung der Emulsion und deren Einstellung auf etwa 30 % Harzgehalt werden 30 Tle./h Harnstoff sowie 130 Tle./h Wasser zugesetzt.

Die so hergestellte Emulsion ist langfristig lagerfähig.

### Beispiel 6

In einem Vorratsbehälter werden 50 Tle. Hydroxyethylcellulose in 2500 Tln. kaltem Wasser vorgequollen. Die etwa 2%ige Lösung wird mit einem Durchsatz von 350 Tln./h in ein Emulsionsgefäß überführt und gleichzeitig auf etwa 60°C erwärmt. In diese Lösung wird verflüssigtes Paraffin (Waxrex79® der Mobil Oil AG) mit einem Durchsatz von 150 Tln./h sowie PMDI mit einem Durchsatz von 3 Tln./h eindosiert und unter Rühren emulgiert. Nach Erreichen einer ausreichenden Vorlagemenge werden 300 Tle./h eines auf 150°C temperierten Pflanzenölharzes (hergestellt gemäß Beispiel 2) in der warmen Vorlage emulgiert. Zur Stabilisierung der Emulsion und deren Verdünnung auf etwa 30 % Harzgehalt werden 30 Tle./h Harnstoff und 180 Tle./h Wasser zugesetzt.

Die so hergestellte Emulsion ist nach über fünf Monaten Zwischenlagerung unter wechselnden Lagerbedindungen ohne Einschränkung verwendbar.

### Beispiel 7

Es wird wie in Beispiel 5 vorgegangen, jedoch wird anstelle des Paraffins Waxrex79® ein unspezifiziertes, in Schuppen vorliegendes, industriell eingesetzes Paraffin der Glunz AG in einer Dosierung von 125 Tln./h eingesetzt. Die erhaltene Emulsion ist nach längerer Lagerzeit ohne Einschränkungen verwendbar.

### Beispiel 8

In einem Vorratsbehälter werden 50 Tle. Hydroxyethylcellulose in 2500 Tln. kaltem Wasser vorgequollen. Die ca. 2%ige Lösung wird mit einem Durchsatz von 300 Tln./h in einen Rührbehälter überführt und gleichzeitig auf ca. 50°C erwärmt. In diese Lösung wird verflüssigtes Paraffin (Waxrex 79® der Mobil Oil AG) mit einem Durchsatz von 100 Tln./h sowie PMDI mit einem Durchsatz von 6 Tln./h eindosiert und unter Rühren emulgiert. Nachdem eine ausreichende Vorlagemenge erreicht ist, werden 300 Tle./h eines Harzes (hergestellt nach Beispiel 3) in der warmen Vorlage emulgiert. Gleichzeitig werden zur Stabilisierung 30 Tle./h Harnstoff und 260 Tle./h Wasser zugesetzt, um die Emulsion auf ca. 30 % Harzgehalt zu verdünnen. Die Emulsion ist auch nach über 6 Monaten Lagerung unter wechselnden Lagerbedingungen ohne Einschränkung anwendbar.

## Patentansprüche

1. Verfahren zum Herstellen wäßriger Bindemitteldispersionen, bei dem wenigstens ein Pflanzenöl- oder -fettharz mit wenigstens einem Di- oder Polyisocyanat und wenigstens einem Paraffin dispergiert wird, dadurch gekennzeichnet, daß Harnstoff als Dispersionsstabilisator zugesetzt wird.

2. Verfahren nach Anspruch 1, dadurch gekennzeichnet, daß als Pflanzenölharz ein Additionsprodukt eines ungesättigtes Pflanzenöls mit a,β-ungesättigten Carbonsäuren oder Carbonsäurederivaten verwendet wird.

3. Verfahren nach Anspruch 2, dadurch gekennzeichnet, daß als Pflanzenölharz ein Additionsprodukt eines ungesättigtes Pflanzenöls mit Maleinsäureanhydrid verwendet wird.

4. Verfahren nach einem der Ansprüche 1 bis 3, dadurch gekennzeichnet, daß der Anteil des Pflanzenöl- oder -fettharzes in der Bindemitteldispersion 10-42 Gew.-% beträgt.

5. Verfahren nach einem der Ansprüche 1 bis 4, dadurch gekennzeichnet, daß der Anteil des Di- oder Polyisocyanats in der Bindemitteldispersion 0,1-12 Gew.-%, vorzugsweise 0,4-4 Gew.-%, beträgt.

6. Verfahren nach einem der Ansprüche 1 bis 5, dadurch gekennzeichnet, daß der Paraffinanteil in der Bindemitteldispersion 10-30 Gew.-% beträgt.

7. Verfahren nach einem der Ansprüche 1 bis 6, dadurch gekennzeichnet, daß das Paraffin in fester und/oder verflüssigter Form zugesetzt wird.

8. Verfahren nach einem der Ansprüche 1 bis 6, dadurch gekennzeichnet, daß das Paraffin in Form einer 40-65%igen wäßrigen Paraffinemulsion zugesetzt wird.

9. Verfahren nach einem der Ansprüche 1 bis 8, dadurch gekennzeichnet, daß Harnstoff in einem Anteil von 0,1-10 Gew.-%, vorzugsweise 2-5 Gew.-% zugesetzt wird.

10. Verfahren nach einem der Ansprüche 1 bis 9, dadurch gekennzeichnet, daß die Bindemitteldispersion bei einer Temperatur von 20-90°C, vorzugsweise 40-75°C, hergestellt wird.

11. Verfahren nach einem der Ansprüche 1 bis 10, dadurch gekennzeichnet, daß bei der Herstellung zusätzlich ein Emulgator eingesetzt wird.

12. Verfahren nach Anspruch 11, dadurch gekennzeichnet, daß als Emulgator ein Celluloseether verwendet wird.

13. Verfahren nach Anspruch 12, dadurch gekennzeichnet, daß der Celluloseether ausgewählt wird aus der Gruppe bestehend aus Hydroxyethylcellulose, Methylhydroxyethylcellulose, Methylhydroxypropylcellulose und Mischungen der vorgenannten Stoffe.

14. Verfahren nach einem der Ansprüche 1 bis 13, dadurch gekennzeichnet, daß die Herstellung der Bindemitteldispersion kontinuierlich erfolgt.

15. Verfahren zum Stabilisieren einer wäßrigen Bindemitteldispersion, die wenigstens ein Pflanzenöl- oder - fettharz, wenigstens ein Di- oder Polyisocyanat und wenigstens ein Paraffin enthält, dadurch gekennzeichnet, daß Harnstoff als Dispersionsstabilisator zugefügt wird.

16. Wäßrige Bindemitteldispersion, die wenigstens ein Pflanzenöl- oder -fettharz, wenigstens ein Di- oder Polyisocyanat und wenigstens ein Paraffin enthält, dadurch gekennzeichnet, daß sie Harnstoff als Dispersionsstabilisator enthält.

17. Verwendung einer Bindemitteldispersion nach Anspruch 16 bei der Herstellung geformter Preßkörper aus Spänen, Fasern, Granulaten und/oder Mehlen.
